# EUROPEAN PATENT APPLICATION

(11) **EP 3 809 503 A1**
(43) Date of publication of application: **21.04.2021**
(21) Application number: 19822589.8
(22) Date of filing: 11.06.2019
(51) Int. Cl.: H01M 8/0245, H01M 8/0243, H01M 8/0234, H01M 4/86

(54) **METHOD FOR MANUFACTURING SLURRY FOR MICROPOROUS LAYER FORMATION AND GAS DIFFUSION LAYER INCLUDING MICROPOROUS LAYER MANUFACTURED THEREBY**

(30) Priority: 18.06.2018 KR 20180069575
(71) Applicant: Kolon Industries, Inc., Seoul 07793 (KR)
(72) Inventor: HA, Ji Min, Seoul 07793 (KR); YOON, Joon Young, Seoul 07793 (KR); YONG, Da Kyoung, Seoul 07793 (KR)
(74) Representative: Ter Meer Steinmeister & Partner
(86) International application number: PCT/KR2019/007020
(87) International publication number: WO 2019/245218

(57) **Abstract**

In the present invention, a water-based wetting dispersant having an acid value of 5 mg KOH/g or more and an amine value of 10 mg KOH/g or less is used to dilute and disperse black carbon and a hydrophobic fluorine resin in an organic solvent to manufacture a slurry for microporous layer formation. In this regard, the added amount of the water-based wetting dispersant is adjusted to 5 to 30 parts by weight on the basis of 100 parts by weight of black carbon. In the present invention, the slurry is applied to at least one surface of carbon fiber paper and dried to form a microporous layer in which two independent peaks appear as analyzed on a particle size graph, followed by compression and deposition thereof to fabricate a gas diffusion layer including the microporous layer in which two independent peaks appear as analyzed on a particle size graph. With the appearance of two independent peaks on a particle size analysis graph, the gas diffusion layer of the present invention has an excellent drainage function, thereby increasing in the current value of the concentration polarization curve at the equivalent voltage value.

## Description

### [Technical Field]

The present application claims the benefit of priority based on Korean Patent Application No. 10-2018-0069575 filed on June 18, 2018, the entire contents of which are incorporated herein by reference.

The present invention relates to a method for preparing a slurry used for manufacturing a microporous layer that constitutes a part of a gas diffusion layer of a fuel cell, and more particularly, to a method of preparing a slurry capable of forming a microporous layer generating two independent peaks on a particle size analysis graph in order to greatly improve the drainage performance of a gas diffusion layer for a fuel cell.

In addition, the present invention relates to a gas diffusion layer having an excellent drainage function and having an effect of increasing a current value of a concentration polarization curve at an equivalent voltage value, by including a microporous layer prepared from a slurry for formation of a microporous layer generating two independent peaks on the particle size analysis graph.

### [Background Art]

The fuel cell is a high efficiency energy source that electrochemically converts fuel (typically a hydrogen-rich gas) and oxidant (typically atmospheric oxygen) into water in the catalyst layer on the two main sides of the polymer electrolyte membrane. The electromechanical reaction creates electrical energy and causes the reactants to react, thereby producing water. In this process, the polymer electrolyte membrane handles quantum transport between the half-cells that perform electrical work using electrons through electrodes and external circuits. The main problem with this type of fuel cell is to maintain a balance between the moisture retention rate required by the membrane and its adjacent catalyst layer. If the water generated during the electromechanical reaction is not properly removed, there arises a problem that the generated water blocks the pores of the gas diffusion layer, thereby obstructing gas transport and reducing the output.

In general, the performance of a fuel cell is determined by the reaction rate at the electrode on which the catalyst is formed, the movement of protons through the electrolyte membrane, the rate of mass transfer and the like. For example, in the fuel cell of hydrogen polymer electrolyte, hydrogen supplied to the fuel electrode undergoes a series of processes of adsorption, decomposition, and desorption on the platinum catalyst, and it is possible to smoothly proceed the reaction by losing a certain amount of the potential of the electrode and thus reducing the activation energy required for this reaction. The potential of the electrode consumed at this time is called activation loss. In addition, there is also a loss of potential due to the current collector, contact resistance, resistance of the electrolyte membrane as a resistive loss, etc. Finally, there is a loss of concentration that occurs when reactants are not supplied smoothly to the fuel electrode and air electrode. The loss of potential due to these various factors acts as a cause of the decrease in the performance of the entire fuel cell.

Nafion, when about 20% of the weight of the polymer is hydrated, contains water as the hydrophilic SO₃⁻ groups of the polymer gather to form channels, and thus exhibits high conductivity for hydrogen ions through these channels. At this time, hydrogen ions pass through the membrane in the form of hydrated H₃O⁺. Therefore, if the polymer membrane loses moisture and becomes dry, the hydrogen ion conductivity decreases, thereby causing shrinkage of the membrane, and thus increasing the contact resistance between the membrane and the electrode. Conversely, if there is too much water, a flooding phenomenon overflowing with water at the electrode occurs, thereby interfering with mass transfer, and thus reducing the electrode reaction rate. Therefore, one of the important properties in a fuel cell is to rapidly drain the generated water to keep the amount of water even.

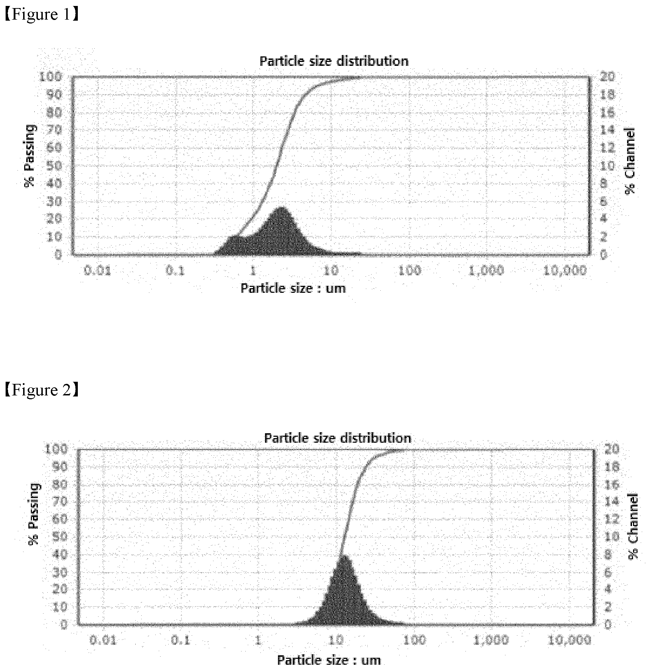

Japanese Laid-open Patent Publication No. 2006-179253 and the like disclose a method of dispersing carbon black and a fluoropolymer (fluorine resin) in a solvent using a nonionic surfactant (e.g. polyoxyethylene tridecyl ether) as a dispersant, when preparing a slurry for formation of a microporous layer used to form the microporous layer included in a gas diffusion layer for a fuel cell. However, since the slurry for formation of the microporous layer prepared by the above conventional method has a unified particle size distribution in the form as shown in FIG. 2, there is a problem that the gas diffusion layer including the microporous layer thus produced has poor drainage performance and thus the current value of the concentration polarization curve at the equivalent voltage value is reduced.

### [Disclosure]

### [Technical Problem]

It is an object of the present invention to provide a method of preparing a slurry for formation of a microporous layer generating two independent peaks on the particle size analysis graph to improve the drainage capacity of the produced gas diffusion layer.

It is another object of the present invention to provide a gas diffusion layer for a fuel cell, which comprises a microporous layer that is made of the slurry and thus generates two independent peaks on the particle size analysis graph, and which has an excellent drainage capacity and an effect of increasing a current value of a concentration polarization curve at an equivalent voltage value.

### [Technical Solution]

In order to achieve these objects, the present invention dilutes and disperses black carbon and hydrophobic fluorine resin in an organic solvent using a water-based wetting dispersant having an acid value of 5mg KOH/g or more and an amine value of 10mg KOH/g or less to prepare a slurry for formation of a microporous layer generating two independent peaks on the particle size analysis graph. At this time, the added amount of the water-based wetting dispersant is adjusted to 5 to 30 parts by weight on the basis of 100 parts by weight of black carbon.

In addition, the present invention prepares a gas diffusion layer including a microporous layer that generates two independent peaks on a particle size analysis graph by coating and drying the slurry on at least one surface of carbon fiber paper.

### [Advantageous Effects]

Since the gas diffusion layer of the present invention has two independent peaks on the particle size analysis graph, it has an excellent drainage function and thus has an effect of increasing the current value of the concentration polarization curve at the equivalent voltage value.

### [Description of Drawings]

FIG. 1 is a particle size distribution graph of the slurry for formation of the microporous layer prepared in Example 1.
FIG. 2 is a particle size distribution graph of the slurry for formation of the microporous layer prepared in Comparative Example 1.
FIG. 3 is a graph showing a correlation between voltage/current concentration of each of the gas diffusion layers prepared in Examples 1 to 2 and Comparative Examples 1 to 3.

### [Best Mode]

Hereinafter, the present invention will be described in detail with reference to the accompanying drawings.

The method for preparing a slurry for formation of a microporous layer according to the present invention prepares a slurry for formation of a microporous layer constituting a gas diffusion layer by diluting and dispersing black carbon and hydrophobic fluorine resin in an organic solvent using a dispersant, characterized in that a water-based wetting dispersant, which is one selected from polyacrylic polymer and polyurethane-based polymer having an acid value of 5 mg KOH/g or more and an amine value of 10 mg KOH/g or less is used as the dispersant.

If the acid value of the water-based wetting dispersant is less than 5mg KOH/g, dispersion performance is not improved, and if the amine value exceeds 10 mg KOH/g, re-aggregation occurs, resulting in poor dispersion stability, and it is difficult to control the particle size of the slurry.

It is preferable to add the water-based wetting dispersant in an amount of 5 to 30 parts by weight based on 100 parts by weight of black carbon. If the water-based wetting dispersant is added in an amount of less than 5 parts by weight, the drainage performance is the same level as the slurry without the dispersant added, if the water-based wetting dispersant is added in an amount of more than 30 parts by weight, since the amount of water-based wetting dispersant volatilized in the heat treatment process is large and thus a large amount of macropores are created in the dried microporous layer, there arises a problem that the appearance quality of the surface of the manufactured gas diffusion layer is deteriorated to such an extent that it is difficult to use.

The black carbon may be carbon black, acetylene black, channel black, furnace black, lamp black, naphthalene black, anthracene black or the like.

The wetting dispersant, which is a polyacrylic polymer, is preferably ammonium polyacrylate or modified polyacrylate.

The hydrophobic fluorine resin may be polytetrafluoroethylene (PTFE), polyvinylidene fluoride (PVDF), tetrafluoroethylene-hexafluoropropylene copolymer (FER), ethyl ene-tetrafluoroethyl ene copolymer (ETFE), polychlorotrifluoroethylene (PCTFE) or the like.

It is preferable that the wetting dispersant has an acid value of 5 to 20 mg KOH/g.

In the present invention, the total solid content of the black carbon, the hydrophobic fluorine resin, and the water-based wetting dispersant in the organic solvent is adjusted to 5 to 10%. If the solid content exceeds 10%, since the carbon black, the hydrophobic fluorine resin, and the water-based wetting dispersant are not sufficiently wetted in the organic solvent, there is a concern that the dispersibility may be lowered.

The D50 values in the particle size distribution graph of the slurry may consist of one D50 value at less than 1.0 *µ*m and one D50 value at 3-10 *µ*m. The D50 values in the particle size distribution graph of the slurry may preferably consist of one D50 value at 0.3∼1.0*µ*m and one D50 value at 3∼8*µ*m. In the case of the microporous layer composed of only particles of less than 1.0 *µ*m, the degree of packing of the particles in the coating layer is tight, so that the water repellency is excellent, but the ability to drain water generated in the fuel cell is deteriorated.

In the case of the microporous layer composed of only particles of about 3∼10*µ*m, the drainage performance is excellent because there are many gaps between the slurry particles in the coating layer, but if excessive drainage proceeds, the inside of the polymer membrane loses moisture and becomes dry, and the hydrogen ion conductivity decreases, thereby causing the membrane to shrink and thus increasing the contact resistance between the membrane and the electrode.

The gas diffusion layer according to the present invention has a structure in which a microporous layer generating two independent peaks on the particle size analysis graph is formed, compressed and laminated on at least one surface of carbon fiber paper.

In an embodiment of the method of manufacturing the gas diffusion layer of the present invention, a gas diffusion layer of the present invention can be prepared by (i) adding carbon black, hydrophobic fluorine resin and water-based wetting dispersant to an organic solvent, and diluting and dispersing them to prepare a slurry for formation of a microporous layer generating two independent peaks on the particle size analysis graph, and (ii) coating the slurry for formation of a microporous layer generating two independent peaks on the particle size analysis graph on at least one surface of a carbon fiber paper and drying it to form a microporous layer generating two independent peaks on the particle size analysis graph on at least one surface of the carbon fiber paper.

Hereinafter, the present invention will be described in detail through examples and comparative examples.

However, the scope of protection of the present invention should not be construed to be limited to the following examples.

### Example 1

To an alcohol-based organic solvent, (i) carbon black with a specific surface area of 220m²/g and a particle diameter of 40 nm and (ii) polytetrafluoroethylene were added in a weight ratio of 77:23, and subsequently, ammonium acrylate (water-based wetting dispersant) having an acid value of 9 mg KOH/g and an amine value of 7 mg KOH/g as a dispersant in an amount of 15 parts by weight relative to 100 parts by weight of the carbon black was added thereto, and then mixed for 2 hours to obtain a slurry for formation of a microporous layer generating two independent peaks on the particle size analysis graph, as shown in FIG. 1.

Next, the slurry for formation of the microporous layer generating two independent peaks on the particle size analysis graph by being prepared as described above was coated on one surface of carbon fiber paper using a doctor blade, and dried at 120 °C for 7 minutes to manufacture a gas diffusion layer in which the microporous layer having two independent peaks on a particle size analysis graph was formed on one surface.

At this time, particle size analysis was performed using a particle size analyzer from Microtrac company, and the basic carbon black measurement mode in the program was used.

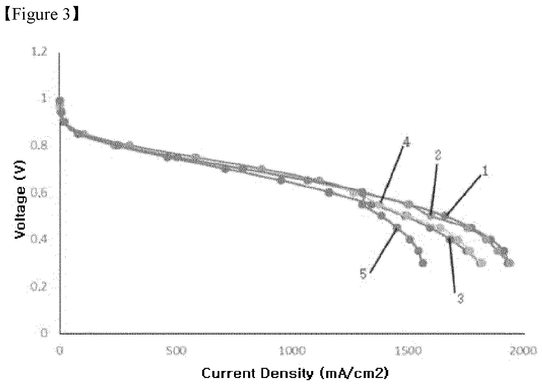

The measurement result of the correlation between voltage/current concentration of the manufactured gas diffusion layer was as shown in the graph of reference numeral 1 in FIG. 3, and the manufactured gas diffusion layer had excellent drainage performance, and thus the current value of the concentration polarization curve at the equivalent voltage value was increased.

### Example 2

To an alcohol-based organic solvent, (i) carbon black with a specific surface area of 220m²/g and a particle diameter of 40 nm and (ii) polytetrafluoroethylene were added in a weight ratio of 77:23, and subsequently, ammonium acrylate (water-based wetting dispersant) having an acid value of 9 mg KOH/g and an amine value of 7 mg KOH/g as a dispersant in an amount of 30 parts by weight relative to 100 parts by weight of the carbon black was added thereto, and then mixed for 2 hours to obtain a slurry for formation of a microporous layer generating two independent peaks on the particle size analysis graph.

Next, the slurry for formation of the microporous layer generating two independent peaks on the particle size analysis graph by being prepared as described above was coated on one surface of carbon fiber paper using a doctor blade, and dried at 120 °C for 7 minutes to manufacture a gas diffusion layer in which the microporous layer having two independent peaks on a particle size analysis graph was formed on one surface.

At this time, particle size analysis was performed using a particle size analyzer from Microtrac company, and the basic carbon black measurement mode in the program was used.

The measurement result of the correlation between voltage/current concentration of the manufactured gas diffusion layer was as shown in the graph of reference numeral 2 in FIG. 3, and the manufactured gas diffusion layer had excellent drainage performance, and thus the current value of the concentration polarization curve at the equivalent voltage value was increased.

### Comparative Example 1

To an alcohol-based organic solvent, (i) carbon black with a specific surface area of 220m²/g and a particle diameter of 40 nm and (ii) polytetrafluoroethylene were added in a weight ratio of 77:23, and then mixed for 2 hours without the use of a dispersant to obtain a slurry for formation of a microporous layer generating one peak on the particle size analysis graph, as shown in FIG. 2.

Next, the slurry for formation of the microporous layer having unified particle size distribution by being prepared as described above was coated on one surface of carbon fiber paper using a doctor blade, and dried at 120 °C for 7 minutes to manufacture a gas diffusion layer in which the microporous layer having one peak on a particle size analysis graph was formed on one surface.

The measurement result of the correlation between voltage/current concentration of the manufactured gas diffusion layer was as shown in the graph of reference numeral 3 in FIG. 3, and the manufactured gas diffusion layer had poor drainage performance, and thus the current value of the concentration polarization curve at the equivalent voltage value was decreased.

### Comparative Example 2

To an alcohol-based organic solvent, (i) carbon black with a specific surface area of 220m²/g and a particle diameter of 40 nm and (ii) polytetrafluoroethylene were added in a weight ratio of 77:23, and subsequently, ammonium acrylate (water-based wetting dispersant) having an acid value of 9 mg KOH/g and an amine value of 7 mg KOH/g as a dispersant in an amount of 4 parts by weight relative to 100 parts by weight of the carbon black was added thereto, and then mixed for 2 hours to obtain a slurry for formation of a microporous layer generating one peak on the particle size analysis graph.

Next, the slurry for formation of the microporous layer generating one peak on the particle size analysis graph by being prepared as described above was coated on one surface of carbon fiber paper using a doctor blade, and dried at 120 °C for 7 minutes to manufacture a gas diffusion layer in which the microporous layer having one peak on a particle size analysis graph was formed on one surface.

At this time, particle size analysis was performed using a particle size analyzer from Microtrac company, and the basic carbon black measurement mode in the program was used.

The measurement result of the correlation between voltage/current concentration of the manufactured gas diffusion layer was as shown in the graph of reference numeral 4 in FIG. 3, and the manufactured gas diffusion layer had poor drainage performance, and thus the current value of the concentration polarization curve at the equivalent voltage value was decreased.

### Comparative Example 3

To an alcohol-based organic solvent, (i) carbon black with a specific surface area of 220m²/g and a particle diameter of 40 nm and (ii) polytetrafluoroethylene were added in a weight ratio of 77:23, and subsequently, ammonium acrylate (water-based wetting dispersant) having an acid value of 9 mg KOH/g and an amine value of 7 mg KOH/g as a dispersant in an amount of 50 parts by weight relative to 100 parts by weight of the carbon black was added thereto, and then mixed for 2 hours to obtain a slurry for formation of a microporous layer generating two independent peaks on the particle size analysis graph.

Next, the slurry for formation of the microporous layer generating two independent peaks on the particle size analysis graph by being prepared as described above was coated on one surface of carbon fiber paper using a doctor blade, and dried at 120 °C for 7 minutes to manufacture a gas diffusion layer in which the microporous layer having two independent peaks on a particle size analysis graph was formed on one surface.

At this time, particle size analysis was performed using a particle size analyzer from Microtrac company, and the basic carbon black measurement mode in the program was used.

The measurement result of the correlation between voltage/current concentration of the manufactured gas diffusion layer was as shown in the graph of reference numeral 5 in FIG. 3, and the manufactured gas diffusion layer had poor drainage performance, and thus the current value of the concentration polarization curve at the equivalent voltage value was decreased.

### [Description of Symbols]

1: Graph of the measured correlation result of the voltage/current concentration of the gas diffusion layer prepared in Example 1.
2: Graph of the measured correlation result of the voltage/current concentration of the gas diffusion layer prepared in Example 2.
3: Graph of the measured correlation result of the voltage/current concentration of the gas diffusion layer prepared in Comparative Example 1.
4: Graph of the measured correlation result of the voltage/current concentration of the gas diffusion layer prepared in Comparative Example 2.
5: Graph of the measured correlation result of the voltage/current concentration of the gas diffusion layer prepared in Comparative Example 3.

## Claims

1. A method of preparing a slurry for formation of a microporous layer constituting a gas diffusion layer by diluting and dispersing black carbon and hydrophobic fluorine resin in an organic solvent using a dispersant,
wherein a water-based wetting dispersant, which is one selected from a polyacrylic polymer and a polyurethane polymer having an acid value of 5mg KOH/g or more and an amine value of 10mg KOH/g or less, is used as the dispersant.

2. The method of preparing the slurry for formation of the microporous layer according to claim 1, wherein the added amount of the water-based wetting dispersant is adjusted to 5 to 30 parts by weight on the basis of 100 parts by weight of black carbon.

3. The method of preparing the slurry for formation of the microporous layer according to claim 1, wherein the wetting dispersant has an acid value of 5∼20mg KOH/g.

4. The method of preparing the slurry for formation of the microporous layer according to claim 1, wherein the wetting dispersant, which is a polyacrylic polymer, is one selected from ammonium polyacrylate and modified polyacrylate.

5. The method of preparing the slurry for formation of the microporous layer according to claim 1, wherein the total solid content of the black carbon, the hydrophobic fluorine resin and the water-based wetting dispersant in the organic solvent is 5∼10%.

6. The method of preparing the slurry for formation of the microporous layer according to claim 1, wherein the two independent peaks of the slurry on the particle size analysis graph consist of one peak at 1 *µ*m or less and one peak at 3∼10 *µ*m.

7. A gas diffusion layer which is formed by compressed and laminated a microporous layer generating two independent peaks on the particle size analysis graph on at least one surface.

8. The gas diffusion layer according to claim 7, wherein the microporous layer comprises one particle size distribution of 1 *µ*m or less and one particle size distribution of 3∼10 *µ*m.
